# EUROPÄISCHE PATENTSCHRIFT

(11) **EP 3 384 567 B1**
(45) Veröffentlichungstag und Bekanntmachung des Hinweises auf die Patenterteilung: **25.12.2019**
(21) Anmeldenummer: 16797449.2
(22) Anmeldetag: 21.09.2016
(51) Int. Cl.: H02B 1/01, H02B 1/30

(54) **RAHMENGESTELL FÜR EINE SCHALTSCHRANKANORDNUNG**
FRAMEWORK FOR A SWITCHGEAR CABINET
CHÂSSIS POUR ARMOIRE ÉLECTRIQUE

(30) Priorität: 04.12.2015 DE 102015121193
(43) Veröffentlichungstag der Anmeldung: 10.10.2018
(73) Patentinhaber: Rittal GmbH & Co. KG, 35745 Herborn (DE)
(72) Erfinder: REUTER, Wolfgang, 56479 Liebenscheid (DE); SCHINDLER, Timo, 35075 Gladenbach (DE); MÜLLER, Matthias, 35683 Dillenburg (DE)
(74) Vertreter: Angerhausen, Christoph
(86) Internationale Anmeldenummer: PCT/DE2016/100441
(87) Internationale Veröffentlichungsnummer: WO 2017/092727

(56) Entgegenhaltungen:
- US-A- 5 380 083
- US-A- 6 164 460

## Beschreibung

Die Erfindung geht aus von einem Rahmengestell für eine Schaltschrankanordnung mit einem Grundgestell, das vier vertikale Profilstreben und acht horizontale Profilstreben aufweist, von denen vier Profilstreben einen rechteckigen Gestellrahmen mit konstantem Querschnitt bilden, und wobei der Gestellrahmen eine von mindestens zwei Profilseiten der Profilstreben gebildete, umlaufende Aufnahme aufweist, die zu einer Außenseite des Gestellrahmens hin geöffnet ist und in die ein rechteckiger Zusatzrahmen eingesetzt ist. Ein derartiges Rahmengestell ist aus der US 5,830,083 A bekannt. Ähnliche Rahmengestelle beschreiben auch die DE 10 2014 101 404 A1, die US 6,164,460 A und die US 2001/0050516 A1.

Die DE 43 36 204 C2 zeigt ein Rahmengestell, das ein Grundgestell aus zwölf im Querschnitt rechteckigen Profilstreben aufweist, die sämtlich über ein im Querschnitt offenes Zusatzprofil von außen flankiert sind.

Die aus dem Stand der Technik bekannten Rahmengestelle haben häufig den Nachteil, dass sie nicht dazu vorbereitet sind, um auf die je nach Anwendungsfall unterschiedlichen Anforderungen, insbesondere im Hinblick auf die jeweils erforderliche mechanische Mindestbelastbarkeit, flexibel reagieren zu können. Dies führt dazu, dass die Querschnittsgeometrien der Profilstreben des Rahmengestells auf maximale Belastbarkeit ausgelegt werden, was jedoch für viele Anwendungen entbehrlich ist. Häufig ist auch für den Schaltschrankhersteller nicht absehbar, in welcher Anwendung ein Kunde den Schaltschrank später verwenden wird. Dementsprechend weisen Rahmengestelle in der Regel einen, gemessen an ihrer konkreten Verwendung, übermäßigen Materialeinsatz auf, oder sie werden in unnötig aufwendigen Herstellungsverfahren zur Ausbildung komplexer und besonders steifer Querschnittsgeometrien hergestellt, um auf alle denkbaren Anforderungsprofile vorbereitet zu sein.

Es ist daher die Aufgabe der Erfindung, ein Rahmengestell für eine Schaltschrankanordnung vorzuschlagen, welche flexibel je nach Anwendungsfall angepasst werden kann, wobei das vorzuschlagende Rahmengestell nicht nur hinsichtlich seiner Belastbarkeit variabel sein sollte, sondern darüber hinaus es auch ermöglichen sollte, bedarfsweise eine zusätzliche Funktion bereitzustellen.

Diese Aufgabe wird durch ein Rahmengestell mit den Merkmalen den Anspruchs 1 gelöst. Die abhängigen Ansprüche betreffen jeweils vorteilhafte Ausführungsformen der Erfindung.

Demgemäß ist vorgesehen, dass der Zusatzrahmen ein Bodenrahmen ist auf den das Grundgestell aufgesetzt ist, wobei der Zusatzrahmen vertikale Durchlässe aufweist, über die er an einem Schaltschranksockel festgelegt ist.

Je nach Anwendungsfall kann der Zusatzrahmen von einer der Außenseiten des Gestellrahmens in die dort von den jeweiligen Gestellrahmen ausgebildete Aufnahme eingesetzt werden, etwa um den Gestellrahmen zu verstärken, oder um eine zusätzliche Auflageseite oder Montageseite für ein weiteres Bauteil bereitzustellen.

Beispielsweise kann der Zusatzrahmen ein Bodenrahmen sein, welcher in den von den vier unteren Horizontalstreben des Grundgestells gebildeten Gestellrahmen eingesetzt wird, um mit Hilfe des Zusatzrahmens das Grundgestell auf einem Schaltschranksockel zu montieren, oder um entlang des Innenumfangs des Grundgestells eine zusätzliche Auflage- und/oder Montageseite mit Befestigungsaufnahmen für die Montage einer Bodenwanne bereitzustellen.

Der Zusatzrahmen kann auch ein Dachrahmen sein, welcher auf den von den vier oberen horizontalen Profilstreben gebildeten Gestellrahmen des Grundgestells aufgesetzt ist, etwa für die Montage eines Dachaufbaus, etwa eines Dachklimageräts.

Genauso ist denkbar, dass der Zusatzrahmen an einer der vertikalen Seiten des Grundgestells, welche von einem Gestellrahmen gebildet wird, der aus zwei Vertikal- und zwei Horizontalstreben gebildet wird, von außen in die Aufnahme des Gestellrahmen eingesetzt und an dem Gestellrahmen gegebenenfalls festgelegt wird. Eine derartige Anordnung kann beispielsweise dazu vorgesehen sein, um die Belastbarkeit des Rahmengestells in Vertikalrichtung zu erhöhen. Weiterhin ist denkbar, mit Hilfe eines derartigen Zusatzrahmens das Rahmengestell für die Anreihung an ein benachbartes Rahmengestell vorzubereiten. Es sind darüber hinausgehende Anwendungen denkbar.

Ein aus acht horizontalen Profilstreben und vier vertikalen Profilstreben zusammengesetztes Grundgestell mit kubischer Geometrie weist sechs rechteckige Gestellrahmen im Sinne der Erfindung auf, wobei die Gestellrahmen jeweils eine der sechs gedachten Kubusflächen des Grundgestells beranden. Es ist denkbar, dass nur einer der sechs rechteckigen Gestellrahmen des Grundgestells mit einem Zusatzrahmen versehen ist, oder dass mehrere Gestellrahmen mit einem Zusatzrahmen versehen sind. Wenn alle zwölf Profilstreben des Grundgestells denselben Profilquerschnitt aufweisen, wird erreicht, dass das Grundgestell kostengünstig hergestellt werden kann und dass für die vertikalen Seitenflächen und die horizontale Boden- und Dachfläche jeweils nur eine Art Zusatzrahmen zur universellen Anwendung bereitgestellt werden muss.

Es kann auch vorgesehen sein, dass für einen Gestellrahmen mehrere Zusatzrahmen mit verschiedenen Profilquerschnitten bereitgestellt werden, um so auf unterschiedliche Anforderungen reagieren zu können. Wenn das Grundgestell dabei einen umlaufend identischen Profilquerschnitt aufweist, kann bereits durch eine kleine Anzahl von Zusatzrahmen unterschiedlicher Querschnittsgeometrien auf vielerlei Anforderungen flexibel reagiert werden.

Die Aufnahme kann eine Auflageseite für den Zusatzrahmen aufweisen. Dabei kann die Aufnahme weiterhin eine Verbindungsseite aufweisen, über die die Auflageseite mit einer äußeren Profilseite oder einer Außenkante des Gestellrahmens verbunden ist. Die Aufnahme kann dazu eingerichtet sein, den Zusatzrahmen teilweise, das heißt nicht vollständig, aufzunehmen, so dass der Zusatzrahmen mit einem Abschnitt aus der Aufnahme des Gestellrahmens herausragt. Der Zusatzrahmen kann jedoch auch vollständig in der Aufnahme aufgenommen sein.

Weiterhin können die Profilstreben des Zusatzrahmens einen umlaufend geschlossenen Hohlprofilquerschnitt aufweisen. Sie können auch einen Hohlprofilquerschnitt mit einer offenen Profilseite aufweisen, die in der Aufnahme aufgenommen und von einer Profilseite der Profilstreben des Grundrahmens verschlossen ist.

Der Zusatzrahmen kann aus fest miteinander verbundenen oder lose zusammengesetzten Einzelprofilstreben aufgebaut sein. Insbesondere kann vorgesehen sein, dass bei der Herstellung des Rahmengestells der Gestellrahmen des Rahmengestells mit vier einzelnen Profilstreben bestückt wird, die erst über ihre relative Anordnung zueinander in der Aufnahmen des Gestellrahmen zur Ausbildung des Zusatzrahmens zusammengeführt und/oder ausgerichtet werden. Die so vorpositionierten Einzelprofilstreben können dann bei Bedarf noch untereinander und/oder jeweils mit den den Gestellrahmen bildenden Profilstreben verbunden, beispielsweise verschraubt oder verschweißt, werden. Die Bestückung der Aufnahme mit Einzelprofilstreben hat gegenüber der Verwendung eines festen, fertig vormontierten Zusatzrahmens den Vorteil, dass bei der Fertigung von Gestellrahmen und Zusatzrahmen geringere Fertigungstoleranzen eingehalten werden müssen. Insbesondere können die Einzelprofile des Zusatzrahmens und gegebenenfalls ein Eckverbinder des Zusatzrahmens, der beispielsweise doppelfunktional auch der Eckverbinder des Gestellrahmens sein kann, darauf ausgelegt sein, den Ausgleich etwaiger Fertigungstoleranzen des Gestellrahmens bei der Montage der Einzelprofile in der Aufnahme zu ermöglichen. Die Eckstücke können dazu Ausgleichelemente und/oder als Langlöcher ausgebildete Befestigungsaufnahmen für Bolzen, über die die Einzelprofile des Zusatzrahmens mit dem Eckstück verbunden werden, aufweisen.

Die Profilstreben des Rahmengestells, insbesondere des Gestellrahmens, können einen umlaufend geschlossenen Hohlprofilquerschnitt aufweisen. Sie können weiterhin mindestens eine von einer Dichtebene zu einem Innenbereich des Rahmengestells hin versetzte Montageebene aufweisen. Die Profilstreben können beispielsweise eine Geometrie aufweisen, wie sie in der DE 10 2014 101 404 A1 offenbart ist. Die Profilstreben können weiterhin eine Geometrie aufweisen, wie sie in der Offenlegungsschrift DE 10 2015 121 192 A1 einer taggleich eingereichten deutschen Patentanmeldung offenbart ist.

Die Auflageseite und die Verbindungsseite können jeweils eine Anlagefläche aufweisen, an dem der Zusatzrahmen zumindest abschnittsweise formschlüssig anliegt, wobei sich die Anlageflächen unter einem Winkel, insbesondere unter einem Winkel von 90°, zueinander erstrecken. Der in der Aufnahme aufgenommene Zusatzrahmen kann über Befestigungsmittel mit dem Gestellrahmen des Grundgestells verbunden sein. Als Befestigungsmittel ist eine Schraubverbindung denkbar. Der Zusatzrahmen kann alternativ oder zusätzlich mit dem Gestellrahmen verschweißt sein.

Der Zusatzrahmen kann an mindestens einer der Auflageflächen über ein Dichtmittel anliegen. Insbesondere dann, wenn der Zusatzrahmen einen Bodenrahmen bildet, auf dem der bodenseitige Gestellrahmen des Grundgestells aufsteht, kann das Dichtmittel dazu dienen, das Eindringen von Feuchtigkeit durch die Aufnahme hindurch in das von dem Grundgestell umrandete Innere eines Schaltschranks zu vermeiden. Dazu kann weiterhin eine eine Aufstandsseite des Zusatzrahmens bildende äußere Profilseite dieses, mit welcher der Zusatzrahmen auf einem Untergrund, beispielsweise einem Schaltschranksockel, aufsteht, vollständig geschlossen sein und somit insbesondere auch keine Befestigungsaufnahmen oder anderweitige Durchlässe aufweisen. Auf diese Weise kann mit Hilfe des Zusatzrahmens eine besonders hohe IP-Schutzfähigkeit, welche im Schaltschrankbau von hoher Relevanz ist, erreicht werden.

Es ist auch denkbar, dass in der Aufnahme zwischen dem Gestellrahmen und dem Zusatzrahmen ein Kanal ausgebildet ist, der an den Ecken des Gestellrahmens und/oder des Zusatzrahmens geöffnet ist. Auf diese Weise kann erreicht werden, dass der noch flüssige Lack bei der Tauchlackierung zum einen besser zwischen den Gestellrahmen und den Zusatzrahmen gelangt und andererseits auch wieder gut abfließen kann. Der Kanal kann dadurch ausgebildet sein, dass ein Steckabschnitt des Zusatzrahmens, über welchen der Zusatzrahmen in die Aufnahme eingesetzt ist, die Aufnahme nicht vollständig ausfüllt und stattdessen beispielsweise in einem Eckbereich der Aufnahme einen Freiraum lässt, welcher sich über die gesamte Länge des Gestellrahmens beziehungsweise des Zusatzrahmens erstreckt.

Der Zusatzrahmen kann den Innenumfang des Gestellrahmens überragen und eine parallel zu der Außenseite des Gestellrahmens ausgerichtete Montage- und/oder Auflageseite aufweisen. Diese Montage- und/oder Auflageseite kann dem Inneren des Rahmengestells zugewandt angeordnet sein und beispielsweise für die Montage von Anbauten von der Innenseite des Rahmengestells beziehungsweise des damit aufgebauten Schaltschranks dienen.

Der Zusatzrahmen kann vier weitere Profilstreben aufweisen, die jeweils an Ihren Enden über ein Eckstück mit einer anderen der weiteren Profilstreben unter einem 90°-Winkel verbunden sind. Dabei weist mindestens eines der Eckstücke ein Verbindungsstück auf, das über einen Ausschnitt in der Aufnahme in einem Eckbereich des Gestellrahmens in den Gestellrahmen hineinragt und dort form- und/oder kraftschlüssig aufgenommen ist. Die Verbindungsstücke können beispielsweise dazu dienen, den Zusatzrahmen in Bezug auf den Gestellrahmen derart vor zu positionieren, dass der Zusatzrahmen einfach in die von dem Gestellrahmen gebildete Aufnahme eingeschoben werden kann. Dies vermeidet dass beim Einschieben der Gestellrahmen und der Zusatzrahmen miteinander verkanten. Weiterhin kann mit Hilfe der Verbindungsstücke der Zusatzrahmen in Bezug auf den Gestellrahmen exakt vorpositioniert werden, so dass anschließend lediglich bedarfsweise noch weitere Maßnahmen für eine kraftschlüssige Verbindung zwischen Gestellrahmen und Zusatzrahmen ergriffen werden müssen. Dies kann beispielsweise das Verschrauben von Gestellrahmen und Zusatzrahmen und/oder das Verschweißen der beiden miteinander umfassen.

Der Zusatzrahmen kann vier weitere, an ihren Enden um 45° zu ihrer Erstreckungsrichtung angeschrägte Profilstreben aufweisen, die jeweils an ihren Enden über ein Eckstück mit einer anderen der weiteren Profilstreben unter Ausbildung eines 90°-Winkel verbunden sind. Es kann vorgesehen sein, dass die angeschrägten Profilenden der weiteren Profilstreben jeweils einen Ausschnitt aufweisen, so dass bei über die Eckstücke miteinander verbundenen Profilstreben die Ausschnitte aneinandergrenzender Profilstreben jeweils einen der Durchlässe bilden. Auf diese Weise wird erreicht, dass bei dem Verschrauben des aus den Profilstreben und Eckstücken zusammengesetzten Zusatzrahmens mit einem Schaltschranksockel oder dergleichen, etwa unter Verwendung einer Zahnscheibe, gleichzeitig auch eine Verbindung der weiteren Profilstreben untereinander erreicht wird.

Das Eckstück kann eine Lasche mit mindestens einem weiteren Durchlass aufweisen, wobei sich die Lasche über die angeschrägten Enden der weiteren Profilstreben in die aneinandergrenzenden weiteren Profilstreben hinein erstreckt und wobei einer der Durchlässe in dem Zusatzprofil mit dem weiteren Durchlass in der Lasche fluchtet. Die fluchtenden Durchlässe können dazu verwendet werden, um etwa mit einer Schraube oder einem andersartigen Gewindebolzen den Zusatzrahmen auf einer Auflagefläche, beispielsweise auf einem Schaltschranksockel, zu verschrauben, wobei über die fluchtenden Durchlässe mit der Verschraubung gleichzeitig eine Fixierung der Eckstücke in Bezug auf die weiteren Profilstreben des Zusatzrahmens erreicht wird.

Der Zusatzrahmen kann formschlüssig in der Aufnahme aufgenommen sein, wobei die Aufnahme in einer Einsteckrichtung für den Zusatzrahmen in die Aufnahme einen konstanten Querschnitt aufweist.

Die Aufnahme kann in der Einsteckrichtung für den Zusatzrahmen in die Aufnahme eine Abmessung aufweisen, die einer Abmessung des Zusatzrahmens in der Einsteckrichtung entspricht, so dass bei in die Aufnahme eingesetztem Zusatzrahmen eine äußere Profilseite des Zusatzrahmens mit einer äußeren Profilseite oder einer Außenkante des Gestellrahmens fluchtet.

Die Auflageseite kann senkrecht zu einer Einsteckrichtung für den Zusatzrahmen in die Aufnahme und die Verbindungsseite kann parallel zu der Einsteckrichtung ausgerichtet sein. Dabei kann die Auflageseite an gegenüberliegenden Kanten in eine Innenumfangsseite des Gestellrahmens und in die Verbindungsseite übergehen, wobei sich die Innenumfangsseite parallel zu der Verbindungsseite erstreckt. Die Verbindungsseite und die Innenumfangsseite können um eine Abmessung der Auflageseite senkrecht zu den Kanten zueinander versetzt angeordnet sein.

Der Gestellrahmen kann einen geschlossenen Profilquerschnitt und der Zusatzrahmen einen offenen Profilquerschnitt aufweisen, wobei in diesem Fall eine offene Profilseite des Zusatzrahmens von mindestens einer geschlossenen Profilseite der Aufnahme des Gestellrahmens verschlossen wird, wenn der Zusatzrahmen in der Aufnahme aufgenommen ist.

Die Geometrie des Zusatzrahmens ist auf keine bestimmten Geometrien beschränkt. Der Zusatzrahmen kann jedoch einen Steckabschnitt aufweisen, über den der Zusatzrahmen in die Aufnahme eingesetzt ist. Die Geometrie des Steckabschnitts kann dabei darauf ausgelegt sein, dass beim Einsetzen des Zusatzrahmens in die Aufnahme eine Führungsfläche des Steckabschnitts entlang einer entsprechenden Führungsfläche der Aufnahme, beispielsweise entlang der Verbindungsseite, geführt ist. Bei diesem Einsetzvorgang kann die Auflageseite der Aufnahme gerade die Funktion eines Anschlags aufweisen, welche die Einschiebbewegung begrenzt, so dass bei an der Auflageseite anliegendem Zusatzrahmen eine definierte Endposition des Zusatzrahmens in Bezug auf den Gestellrahmen erreicht ist.

Der Zusatzrahmen kann weiterhin einen Befestigungsabschnitt mit Montageöffnungen aufweisen. Die Montageöffnungen können an einer Profilseite des Befestigungsabschnitts ausgebildet sein, die dem Inneren des Rahmengestells zugewandt ist. Die Montageöffnungen können jedoch auch zu der jeweiligen Außenseite des Gestellrahmens hin geöffnet sein. Der Befestigungsabschnitt kann insbesondere darauf ausgelegt sein, eine Innenumfangsseite des Gestellrahmens zum Inneren des Rahmengestells hin zu überragen. Dabei kann der Zusatzrahmen mit dem Befestigungsabschnitt an der Innenumfangsseite des Gestellrahmens anliegen, wenn der Zusatzrahmen über den Steckabschnitt in die Aufnahme eingesetzt ist. Der Zusatzrahmen kann die Innenumfangsseite des Gestellrahmens insbesondere in der Ebene des Gestellrahmens überragen.

Die Verwendung eines Zusatzrahmens ermöglicht es insbesondere dass dieser aus einem unterschiedlichen Material im Vergleich zu dem Grundgestell hergestellt ist. Insofern kann auch durch die Materialwahl auf Festigkeitsanforderung oder andere Bedingungen reagiert werden. Insbesondere erlaubt dies, dass beispielsweise der Zusatzrahmen aus einem Kunststoffmaterial, beispielsweise aus einem glasfaserverstärktem Kunststoff, hergestellt ist. Weiterhin kann der Zusatzrahmen aus einem elektrisch nicht leitenden Material hergestellt sein, um auf diese Weise eine elektrische Isolierung zwischen über den Zusatzrahmen montierten Komponenten und dem Grundgestell des Rahmengestells zu erreichen.

Weitere Einzelheiten der Erfindung werden anhand der nachstehenden Figuren erläutert. Dabei zeigt:
- Figur 1: perspektivisch ein beispielhaftes Rahmengestell;
- Figur 2: die Bodengruppe des Rahmengestells gemäß Figur 1;
- Figur 3: den Eckbereich der Bodengruppe eines beispielhaften Rahmengestells;
- Figur 4: eine perspektivische Querschnittsansicht eines weiteren Rahmengestells;
- Figur 5: eine perspektivische Querschnittsansicht noch eines weiteren Rahmengestells;
- Figur 6: eine perspektivische Querschnittsansicht noch eines weiteren Rahmengestells;
- Figuren 7a und 7b: schematisch zwei mögliche Arten der Vereinigung von Gestellrahmen und Zusatzrahmen;
- Figur 8: zwei mögliche Befestigungsarten des Zusatzrahmens an dem Gestellrahmen;
- Figur 9: die Befestigung eines Rahmengestells auf einem Schaltschranksockel;
- Figur 10: die Verbindung des Zusatzrahmens mit dem Gestellrahmen unter Verwendung eines Eckstücks; und
- Figuren 11-13: weitere Querschnittsgeometrien möglicher Profilstrebenkombinationen für den Gestellrahmen und den Zusatzrahmen.

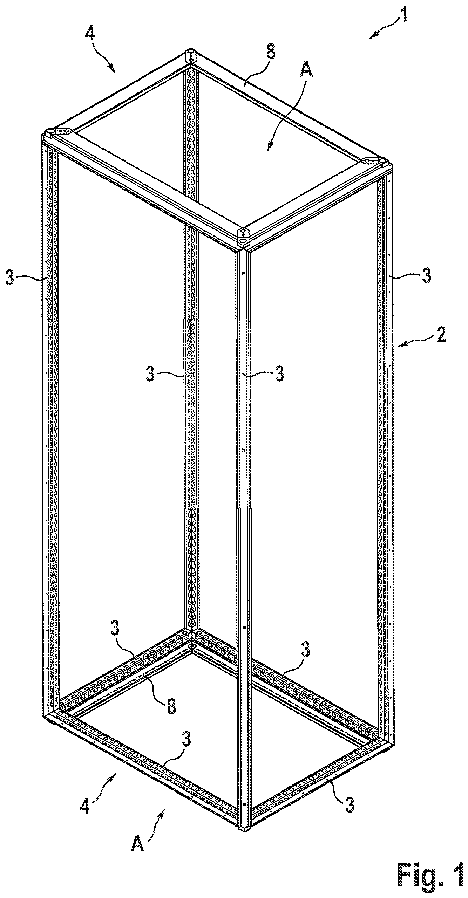

Die Figur 1 zeigt ein beispielhaftes Rahmengestell 1, welches aus einem Grundgestell 2 sowie einem bodenseitigen und einem dachseitigen Zusatzrahmen 8 zusammengesetzt ist. Die Zusatzrahmen 8 sind jeweils von der Außenseite A an das Grundgestell angelegt. Beispielsweise kann dazu der untere Zusatzrahmen 8 auf einem Untergrund aufgelegt oder beispielsweise an einem Schaltschranksockel festgelegt werden, woraufhin das Grundgestell 2 auf den bodenseitigen Zusatzrahmen 8 aufgestellt wird. Der dachseitige Zusatzrahmen 8 ist von der dachseitigen Außenseite A des Grundgestells 2 auf das Grundgestell 2 aufgelegt. Das Grundgestell 2 weist vier Vertikal- und acht Horizontalstreben auf, die jeweils dieselbe Querschnittsgeometrie aufweisen.

Wie zu erkennen ist, überragt der Zusatzrahmen 8 den jeweiligen bodenseitigen beziehungsweise dachseitigen Gestellrahmen 4 an der dem Schaltschrankinneren zugewandten Innenumfangsseite der Profilstreben 3. Im Falle des bodenseitigen Zusatzrahmens 8 bildet der den bodenseitigen Gestellrahmen 4 nach innen überragende Teil des Zusatzrahmens 8 eine Montageund Auflageseite, welche beispielsweise für die Montage einer Bodenwanne eines Schaltschranks verwendet werden kann. Mit Hilfe des dachseitigen Zusatzrahmens 8 ist eine horizontale Montageebene bereitgestellt, auf der beispielsweise ein Dachaufbau in Form eines Kühlgeräts oder dergleichen aufgesetzt und montiert werden kann.

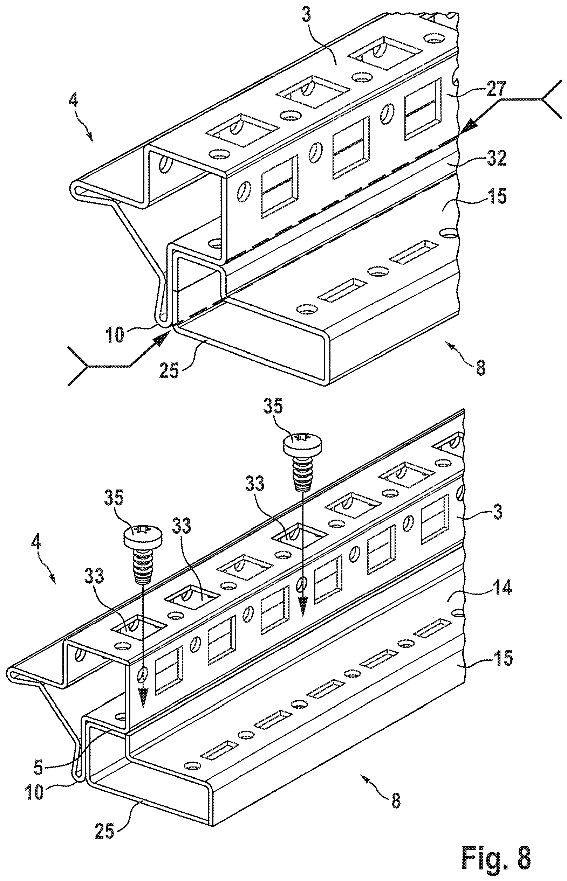

Die Zusatzrahmen 8 können mit dem Grundgestell 2 lösbar oder unlöslich verbunden sein. Es kann insbesondere vorgesehen sein, dass mindestens ein Zusatzrahmen 8 von einem Endbenutzer bedarfsweise nachgerüstet werden können soll, wozu zwischen dem Grundgestell 2 und dem Zusatzrahmen 8 Schraubverbindungen ausgebildet sind. Nähere Einzelheiten dazu sind in Figur 8 gezeigt.

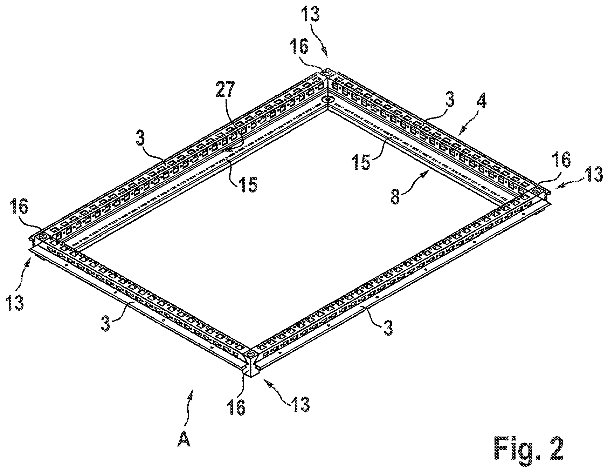

Figur 2 zeigt beispielhaft die Bodengruppe des Rahmengestells 1 gemäß Figur 1. Diese besteht aus dem bodenseitigen Gestellrahmen 4, an dem von der Außenseite A des Grundgestells 2 gemäß Figur 1 der Zusatzrahmen 8 angesetzt ist. Da Figur 2 die Bodengruppe zeigt, ist der Zusatzrahmen 8 folglich in der Darstellung gemäß Figur 2 von unten an den Gestellrahmen 4 angesetzt, beziehungsweise der Gestellrahmen 4 gemäß Figur 1 auf den Zusatzrahmen 8 aufgestellt.

Der Gestellrahmen 4 weist eine rechteckige Geometrie auf und ist folglich aus zwei mal zwei gleich langen Profilstreben 3 zusammengesetzt. Diese sind an ihren Ecken 13 mit Eckverbindern 16 zu dem rechteckigen Gestellrahmen 4 miteinander verbunden. Der Zusatzrahmen 8 ist entsprechend aus vier weiteren Profilstreben 15 zusammengesetzt, die eine Innenumfangsseite 27 des Gestellrahmens 4 in Richtung des Inneren des Rahmens überragen. Die Eckverbinder 16 können derart ausgebildet sein, dass sie sowohl für die Verbindung der weiteren Profilstreben 1 5 des Zusatzrahmens 8 dienen, als auch zur Verbindung der Profilstreben 3 des Gestellrahmens 4. Dazu kann vorgesehen sein, dass die weiteren Profilstreben 15 des Zusatzrahmens 8 über die Eckstücke 16 miteinander verschraubt sind, während der derart vormontierte Zusatzrahmen 8 in einem nachfolgenden Montageschritt über die selben Eckstücke 16 mit dem Gestellrahmen 4 verbunden, beispielsweise verschweißt oder verschraubt wird.

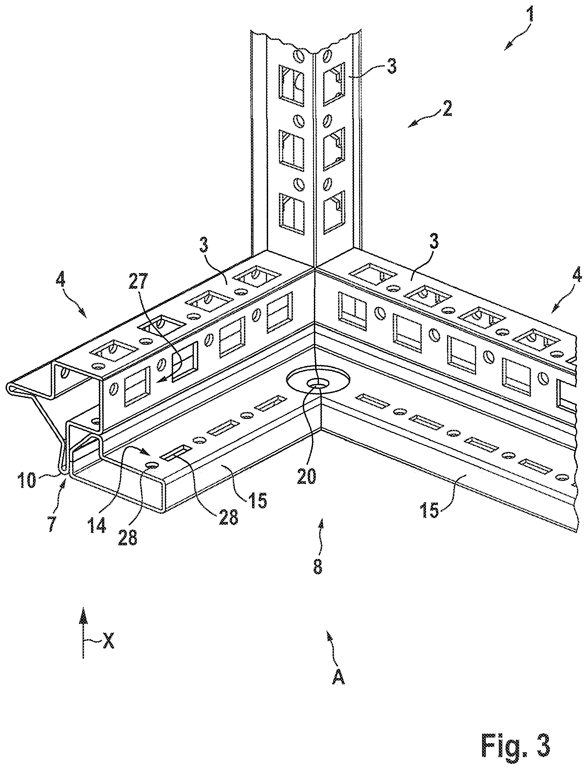

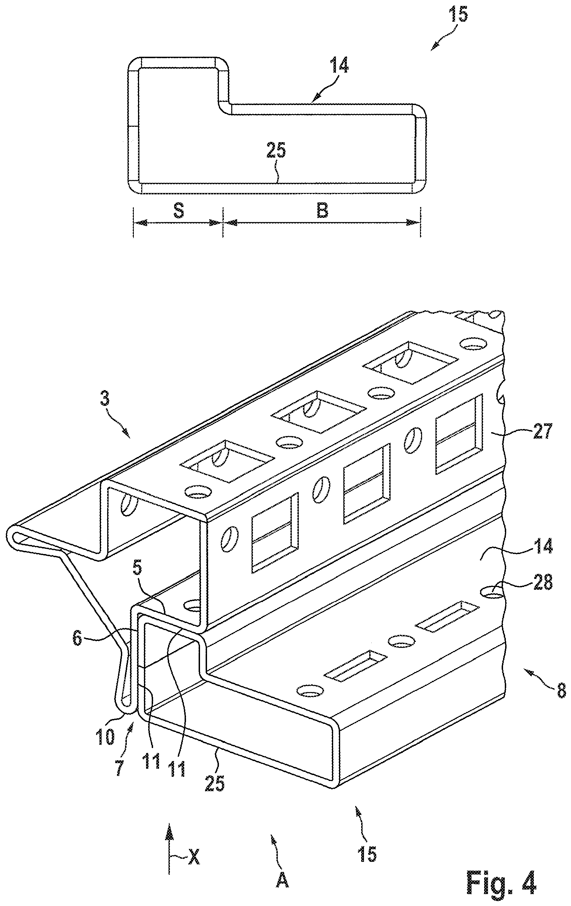

Die Figur 3 zeigt den Eckbereich einer Bodengruppe eines beispielhaften Rahmengestells 1. Wie zu erkennen ist, sind sowohl die Horizontalstreben 3 des Grundgestells 2 als auch das Vertikalprofil 3 im Querschnitt identisch ausgeführt. Dadurch, dass das Grundgestell 2 rundum damit nur eine Profilart verwendet, ist es kostengünstig und einfach herstellbar. Um jedoch dem aus den Horizontalprofilen 3 gebildeten Gestellrahmen zusätzliche Festigkeit zu verleihen, ist ein Zusatzrahmen 8 in die Aufnahme 7 des Gestellrahmens 4 von der Außenseite A, das heißt in der Darstellung von Figur 3 von unten, durch eine Einschubbewegung in Einsteckrichtung X eingesetzt. Im Eckbereich weist der Zusatzrahmen 8 einen Durchlass 20 auf, über den der Zusatzrahmen 8 beispielsweise auf einem Schaltschranksockel festgelegt werden kann. Der Durchlass 20 ist in einem Profilabschnitt des Zusatzrahmens 8 ausgebildet, welcher die Innenumfangsseite 27 des Gestellrahmens 4 in Richtung des Rahmeninneren überragt. Auf einer Montage- und/oder Auflageseite 14, welche dem Gestellrahmeninnern zugewandt ist und mit welcher der Zusatzrahmen 8 die Innenumfangsseite 27 des Gestellrahmens 4 überragt, sind Montageöffnungen 28 ausgebildet, etwa für die Montage einer Bodenwanne oder dergleichen. Es ist zu erkennen, dass die Aufnahme 7 eine in Einsteckrichtung X gleichbleibende Geometrie aufweist. Dies ist im Detail mit Bezug auf die Figuren 4-6 erläutert.

Die Figuren 4-6 zeigen verschiedene Geometrien für Zusatzrahmen 8, die mit jeweils derselben Grundgestellgeometrie kombiniert sind. Die Profilstreben 3 des Grundgestells 2 weisen eine Aufnahme 7 auf, welche sowohl zu der Außenseite A hin, als auch zum Inneren des von den Profilstreben 3 gebildeten Gestellrahmens 4 hin geöffnet ist. Die Aufnahme 7 wird im Wesentlichen aus einer Auflageseite 5 und einer davon abgekanteten Verbindungsseite 6 gebildet, wobei die Auflageseite 5 über die Verbindungsseite 6 mit einer Außenkante 10 der Profilstrebe 3 verbunden ist. Der Zusatzrahmen 8 weist in einem in der Aufnahme 7 aufgenommenen Abschnitt endseitig gerade eine Abmessung in Einsteckrichtung X auf, welche der Länge der Verbindungsseite 6 entspricht, so dass bei vollständig in die Aufnahme in Einsteckrichtung X eingesetztem Zusatzrahmen 8 eine äußere, bodenseitige Profilseite 25 des Zusatzrahmens 8 mit der Außenkante 10 des Gestellrahmens 4 fluchtet, so dass die Außenkante 10 und die äußere Profilseite 25 eine ebene Auflagefläche bilden. Die Auflageseite 5 bildet gerade eine Anschlagsfläche für den Zusatzrahmen 8, wenn dieses entlang der Einsteckrichtung X in die Aufnahme 7 eingeschoben wird. Zwischen der Verbindungsseite 6 und/oder der Auflageseite 5 und dem Zusatzrahmen 8 ist ein Dichtmittel 11 angeordnet, um zu vermeiden, dass Feuchtigkeit von der Außenseite A durch die Aufnahme 7 hindurch in den von dem Grundgestell umrahmten Raum eintritt. Auch die äußere Profilseite 25 des Zusatzrahmens 8 ist zu diesem Zweck vollflächig geschlossen und weist insbesondere keine Montageöffnungen oder dergleichen auf, so dass das Eindringen von Feuchtigkeit über die Außenseite A zu vermieden wird. Vertikal beabstandet von der äußeren Profilseite 25 ist die Montage- und/oder Auflageseite 14, welche dem Schaltschrankinneren zugewandt ist und beispielsweise eine Festlegungsmöglichkeit für eine Bodenwanne bietet. Dazu sind Montageöffnungen 28 vorgesehen.

Der Zusatzrahmen 8 ist aus Profilstreben 15 aufgebaut, die den im oberen Bereich der Figur 4 gezeigten Querschnitt aufweisen. Der Querschnitt der weiteren Profilstreben 15 unterteilt sich in einen Steckabschnitt S, über den der Zusatzrahmen in die Aufnahme 7 eingesetzt ist, und einen Befestigungsabschnitt B, mit welchem der Zusatzrahmen 8 die Innenumfangsseite 27 des Gestellrahmens 4 nach innen und in der von dem Gestellrahmen 4 gebildeten Ebene überragt.

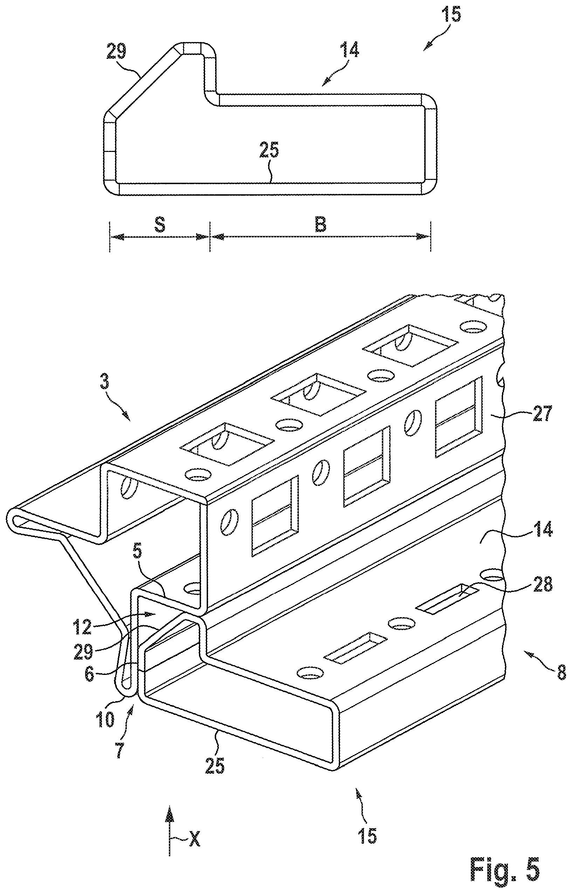

Abweichend von der Ausführungsform gemäß Figur 4 ist bei der Ausführungsform gemäß Figur 5 der Querschnitt des Steckabschnitts S der weiteren Profilstrebe 15 mit einer Schrägseite 29 versehen, wodurch erreicht wird, dass bei vollständig in die Aufnahme 7 eingesetzten Zusatzrahmen 8 die Aufnahme 7 nicht vollständig ausgefüllt wird und stattdessen in einem Eckbereich der Aufnahme 7 ein Kanal 12 frei bleibt, welcher sich in Längsrichtung der Profilstreben 3, 15 erstreckt. Dadurch kann das Ablaufen des Lacks bei der Tauchlackierung begünstigt werden. Weiterhin wird durch die sich an der Schrägseite 29 ergebende schräge Fläche eine Materialeinsparung im Vergleich zu der Profilstrebe 15 gemäß Figur 4 erreicht. Wie zu erkennen ist, liegt der Steckabschnitt jedoch abschnittsweise formschlüssig sowohl an der Auflageseite 5 als auch an der Verbindungsseite 6 an, um wiederum eine definierte Positionierung des Zusatzrahmens 8 in Bezug auf die Profilstrebe 3 zu erreichen.

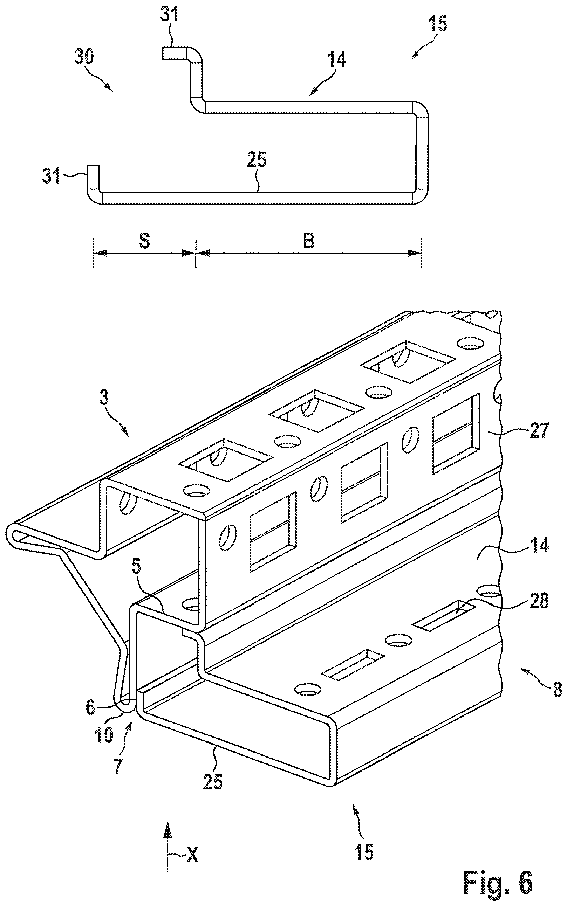

Bei der in Figur 6 gezeigten Ausführungsform weist der Querschnitt der weiteren Profilstrebe 15 des Zusatzrahmens 8 eine offene Profilseite 30 auf, wobei die offene Profilseite 30 gerade ein Teil des Steckabschnitts S ist, welcher bei in die Aufnahme 7 eingesetztem Zusatzrahmen 8 der Verbindungsseite 6 und/oder der Auflageseite 5 zugewandt ist. Dadurch wird erreicht, dass bei vollständig in die Aufnahme 7 eingesetztem Zusatzrahmen 8 die offene Profilseite 30 des Zusatzrahmens 8 von der Auflageseite 5 und/oder der Verbindungsseite 6 verschlossen wird. Auch bei dieser Ausführungsform ist wiederum zu erkennen, dass trotz der offenen Profilseite 30 der Steckabschnitt zumindest über sich rechtwinklig zueinander erstreckende Abkantungen 31 an der Auflageseite 5 beziehungsweise der Verbindungsseite 6 anliegt, um wiederum eine definierte Positionierung des Zusatzrahmens 8 in Bezug auf die Profilstrebe 3 zu erreichen, wenn der Zusatzrahmen 8 vollständig in die Aufnahme 7 eingesetzt ist.

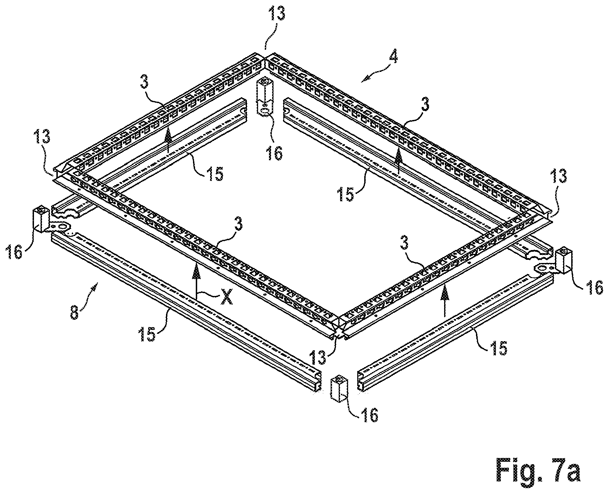

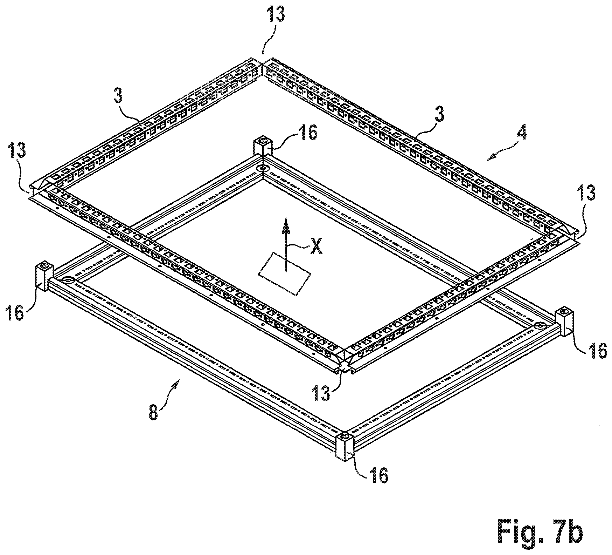

Mit Bezug auf die Figuren 7a und 7b werden zwei mögliche Weisen für die Verbindung des Zusatzrahmens 8 mit dem Gestellrahmen 4 gezeigt. Während bei der in Figur 7a gezeigten Variante sowohl die Profilstreben 15 des Zusatzrahmens 8 als auch die Profilstreben 3 des Gestellrahmens 4 als Einzelprofile über die Eckstücke 16 miteinander verbunden werden, ist bei der Variante gemäß Figur 7b vorgesehen, dass der Zusatzrahmen 8 über die Eckstücke 16 vormontiert wird, um in einem folgenden Schritt die Profilstreben 3 des Gestellrahmens 4 anzusetzen. Es ist auch eine Nachrüstlösung denkbar, bei der das bereits fertig montierte Grundgestell 2 nachträglich mit einem Zusatzrahmen 8 bestückt wird. Die Art der Verbindung von Zusatzrahmen und Grundgestell kann davon abhängen, ob dies bereits im Rahmen des Fertigungsprozesses des Rahmengestells erfolgen soll, oder ob eine Nachrüstlösung bevorzugt wird.

Die Figur 8 zeigt zwei mögliche Verbindungsvarianten für die Profilstreben 3 des Rahmengestells 4 mit den weiteren Profilstreben 15 des Zusatzrahmens 8. In der oberen Darstellung sind der Gestellrahmen 4 und der Zusatzrahmen 8 entlang der mit Strichlinien gekennzeichneten Kanten miteinander verschweißt. Dabei ist eine erste Schweißnaht gerade zwischen der Außenkante 10 des Gestellrahmens 4 und der äußeren Profilseite 25 des Zusatzrahmens 8 ausgebildet. Eine zweite Schweißnaht ist zwischen der Innenumfangsseite 27 des Gestellrahmens 4 und einer daran fluchtend angrenzenden Profilseite 32 des Zusatzrahmens 8 ausgebildet.

In der unteren Darstellung ist gezeigt, dass der Gestellrahmen 4 und der Zusatzrahmen 8 auch miteinander verschraubt werden können. Die Schraubverbindung ist dabei gerade zwischen der Auflageseite 5 der Profilstrebe 3 und einer daran formschlüssig anliegenden Profilseite der weiteren Profilstrebe 1 5 ausgebildet. In Schraubrichtung vor entsprechenden Schraubkanälen in der Auflageseite 5 und der weiteren Profilstrebe 15 sind in einer von der Auflageseite parallel beabstandeten weiteren Profilseite des Profilstrebe 3 Werkzeugöffnungen 33 ausgebildet, um mit einem Schraubwerkzeug einen Bolzen 35oder dergleichen antreiben zu können.

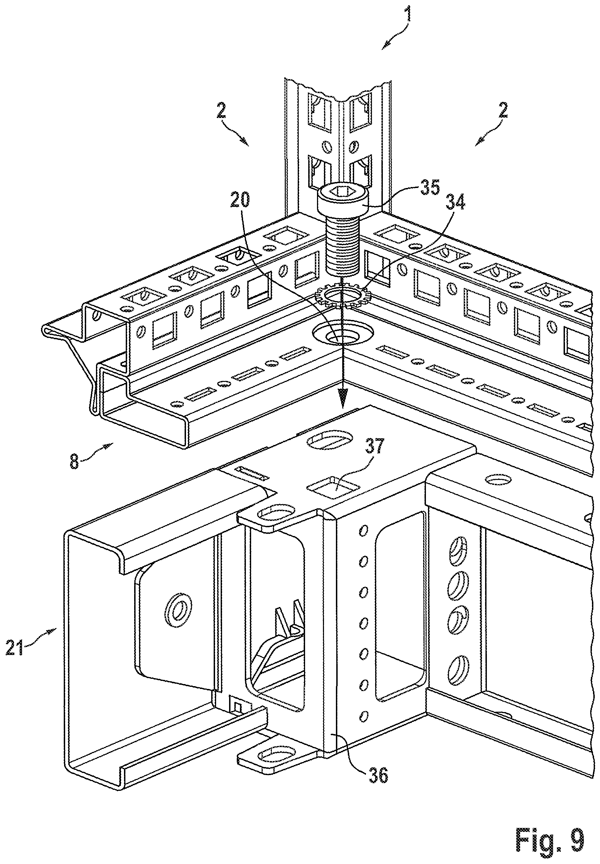

Die Figur 9 veranschaulicht die Montage eines Rahmengestells 1 bestehend aus Grundgestell 2 und Zusatzrahmen 8 auf einem Schaltschranksockel 21, nachdem das Grundgestell 2 und der Zusatzrahmen 8 vorab miteinander verbunden worden sind. Dazu weist der Zusatzrahmen 8 in einem Eckbereich einen Durchlass 20 auf, welcher mit einer entsprechenden Gewindeöffnung 37 in einem Sockeleckstück 36 eines Schaltschranksockels 21 fluchtet. Für die Herstellung einer haltbaren Verbindung sind der Zusatzrahmen 8 und das Sockeleckstück 36 über einen Bolzen 35, der durch den Durchlass 20 in die Gewindeöffnung 37 ragt, unter Verwendung einer Zahnscheibe 34 verschraubt.

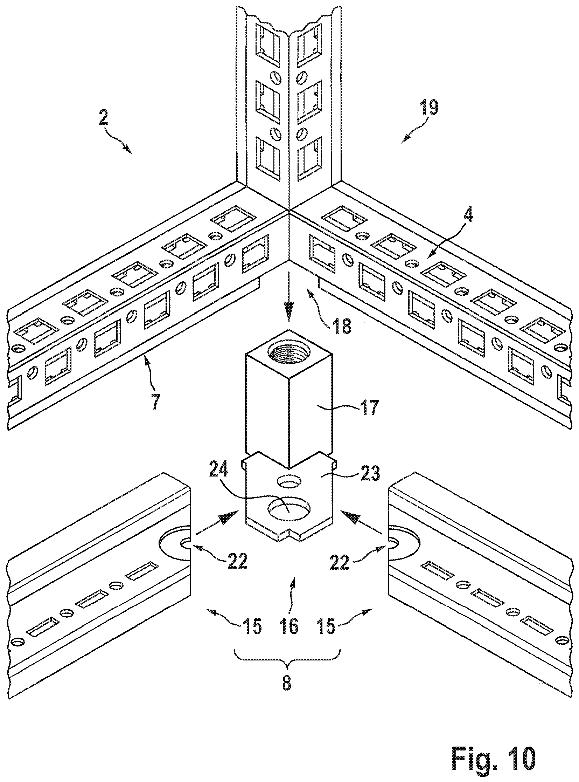

In der Figur 10 ist eine Ausführungsform gezeigt, bei dem der Zusatzrahmen 8 ein Bodenrahmen ist, auf den das Grundgestell 2 aufgesetzt ist. Der Zusatzrahmen 8 weist in einem Eckbereich einen vertikalen Durchlass 20 auf, über den er beispielsweise an einem Schaltschranksockel festgelegt werden kann (siehe Figur 9). Der Zusatzrahmen 8 weist vier an ihren Enden um 45° zu ihrer Erstreckungsrichtung angeschrägte Profilstreben 15 auf, die an ihren Enden über ein Eckstück 16 miteinander unter Ausbildung eines 90°-Winkels verbunden sind. Die angeschrägten Profilenden weisen jeweils einen Ausschnitt 22 auf, so dass bei über das Eckstück 16 miteinander verbundenen Profilstreben 15 die Ausschnitte 22 der aneinander grenzenden Profilstreben 15 den Durchlass 20 bilden. Das Eckstück 16 weist ein Verbindungsstück 17 auf, das sich in vertikaler Richtung erstreckt und über einen Ausschnitt 18 im Eckbereich 19 der Aufnahme 7 in den Gestellrahmen 4 hineinragt und dort form- und/oder kraftschlüssig aufgenommen ist. Das Eckstück 16 weist weiterhin eine Lasche 23 mit einem weiteren Durchlass 24 auf, wobei sich die Lasche 23 über die angeschrägten Enden der Profilstreben 15 in diese hinein erstreckt. Die Durchlässe 20 und 24 sind gerade derart angeordnet, dass sie miteinander fluchten, so dass beim Verschrauben des Zusatzrahmens 8 das Eckstück 16 in Bezug auf die Profilstreben 15 des Zusatzrahmens 8 exakt vorpositioniert wird.

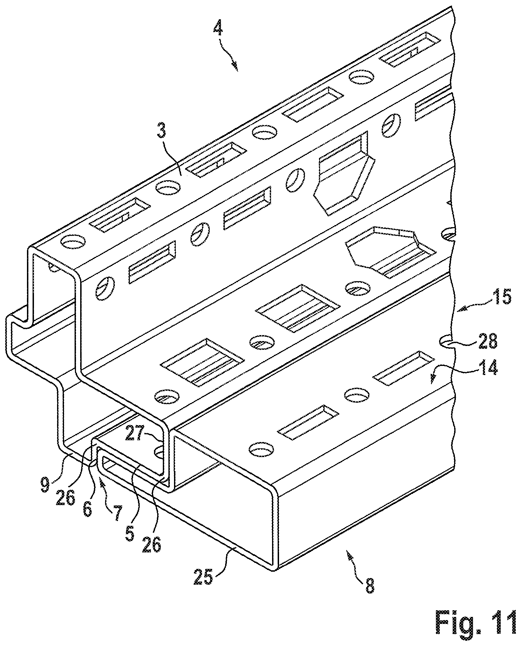

Die Figuren 11-13 zeigen mögliche Geometrien für die Profilstrebe 3 des Gestellrahmens 4 und die Profilstreben 15 des Zusatzrahmens 8. Allen Ausführungsformen gemein ist, dass eine äußere Profilseite 9 des Gestellrahmens 4, welche beispielsweise eine Aufstandsfläche des Profilrahmens bildet, mit einer äußeren Profilseite 25 der Profilstreben 15 fluchtet, so dass die Seiten 9 und 25 eine ebene Auflagefläche bilden. Darüber hinaus sind die Geometrien eines Steckabschnitts des Zusatzrahmens 8 jeweils so ausgebildet, dass sie die Aufnahme 7 des Gestellrahmens 4 möglichst vollständig ausfüllen. Darüber hinaus liegt der Zusatzrahmen 8 stets jeweils an der Innenumfangsseite 27 des Gestellrahmens 4 an. Bei der Ausführungsform gemäß Figur 11 fluchtet die Montage- und/oder Auflageseite 14 des Zusatzrahmens 8 mit einer daran angrenzenden Profilseite des Gestellrahmens 4, um so eine möglichst großflächige Auflage für Schaltschrankeinbauten zu bieten.

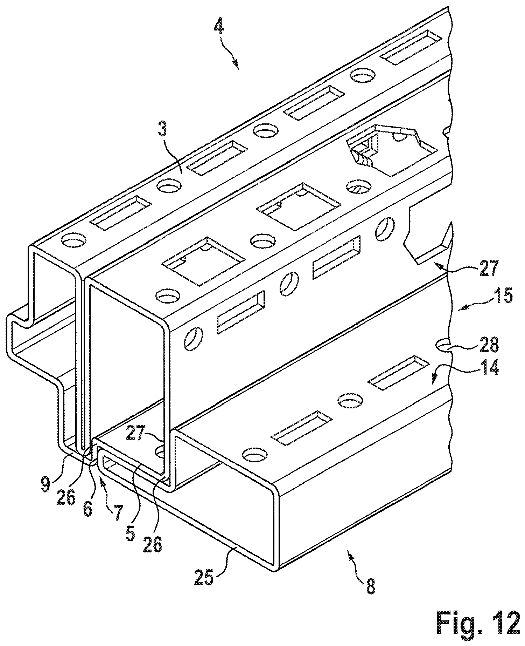

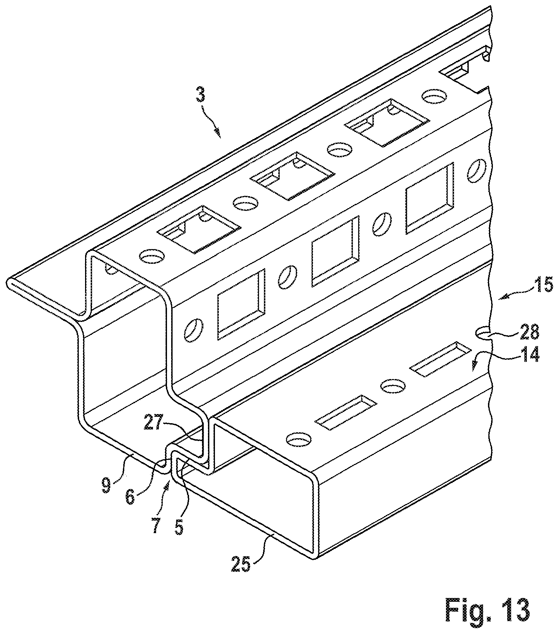

Die Ausführungsform gemäß Figur 12 zeigt einen Gestellrahmen 4, bei dem die Profilstrebe 3 für besonders hohe vertikale Belastungen ausgelegt ist und dazu in ihrem Innern einen sich in Vertikalrichtung von einer horizontalen Oberseite des Profils erstreckenden doppellagigem Steg aufweist, der sich innenseitig an der äußeren Profilseite 9 abstützt. Der Zusatzrahmen 8 weist eine Montage- und/oder Auflageseite 14 auf, welche sich senkrecht zu einer Innenumfangsseite 27 des Gestellrahmens 4 erstreckt und damit innerhalb des von dem Gestellrahmen 4 gebildeten Umfangs eine Montagefläche mit Montageöffnungen 28 zur Verfügung stellt. Eine weitere Variante ist in Figur 13 gezeigt.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 1: Rahmengestell
- 2: Grundgestell
- 3: Profilstrebe
- 4: Gestellrahmen
- 5: Auflageseite
- 6: Verbindungsseite
- 7: Aufnahme
- 8: Zusatzrahmen
- 9: äußere Profilseite des Gestellrahmens
- 10: Außenkante des Gestellrahmens
- 11: Dichtmittel
- 12: Kanal
- 13: Ecke
- 14: Montage- und/oder Auflageseite
- 15: weitere Profilstrebe
- 16: Eckstück
- 17: Verbindungsstück
- 18: Ausschnitt
- 19: Eckbereich
- 20: Durchlass
- 21: Schaltschranksockel
- 22: Ausschnitt
- 23: Lasche
- 24: Durchlass
- 25: äußere Profilseite des Zusatzrahmens
- 26: Kante
- 27: Innenumfangsseite des Gestellrahmens
- 28: Montageöffnung der Montageseite
- 29: Schrägseite
- 30: offene Profilseite
- 31: Abkantungen
- 32: fluchtende Profilseite des Zusatzrahmens
- 33: Werkzeugöffnung
- 34: Zahnscheibe
- 35: Bolzen
- 36: Sockeleckstück
- 37: Gewindeöffnung
- A: Außenseite
- B: Befestigungsabschnitt
- S: Steckabschnitt
- X: Einsteckrichtung

## Patentansprüche

1. Rahmengestell (1) für eine Schaltschrankanordnung, mit einem Grundgestell (2), das vier vertikale Profilstreben (3) und acht horizontale Profilstreben (3) aufweist, von denen vier Profilstreben (3) einen rechteckigen Gestellrahmen (4) mit konstantem Querschnitt bilden, und wobei der Gestellrahmen (4) eine von mindestens zwei Profilseiten (5, 6) der Profilstreben (3) gebildete, umlaufende Aufnahme (7) aufweist, die zu einer Außenseite (A) des Gestellrahmens (4) hin offen ist und in die ein rechteckiger Zusatzrahmen (8) eingesetzt ist, wobei der Zusatzrahmen (8) ein Bodenrahmen ist, auf den das Grundgestell (2) aufgesetzt ist, **dadurch gekennzeichnet, dass** der Zusatzrahmen (8) vertikale Durchlässe (20) aufweist, über die er an einem Schaltschranksockel (21) festgelegt ist.

2. Rahmengestell (1) nach Anspruch 1, bei dem die Aufnahme (7) eine Auflageseite (5) für den Zusatzrahmen (8) und eine Verbindungsseite (6) aufweist, über die die Auflageseite (5) mit einer äußeren Profilseite (9) oder einer Außenkante (10) des Gestellrahmens (4) verbunden ist.

3. Rahmengestell (1) nach Anspruch 2, bei dem die Auflageseite (5) und die Verbindungsseite (6) jeweils eine Auflagefläche bilden, an denen der Zusatzrahmen (8) zumindest abschnittsweise formschlüssig anliegt, wobei sich die Auflageflächen unter einem Winkel, insbesondere unter einem Winkel von 90°, zueinander erstrecken.

4. Rahmengestell (1) nach Anspruch 3, bei dem der Zusatzrahmen (8) an zumindest einer der Auflageflächen über ein Dichtmittel (11) anliegt.

5. Rahmengestell (1) nach einem der vorangegangen Ansprüche, bei dem in der Aufnahme (7) zwischen dem Gestellrahmen (4) und dem Zusatzrahmen (8) ein Kanal (12) ausgebildet ist, der an den Ecken (13) des Gestellrahmens (4) und/oder des Zusatzrahmens (8) geöffnet ist.

6. Rahmengestell (1) nach einem der vorangegangen Ansprüche, bei dem der Zusatzrahmen (8) den Innenumfang des Gestellrahmens (4) überragt und eine parallel zu der Außenseite (A) des Gestellrahmens (4) ausgerichtete Montage- und/oder Auflageseite (14) aufweist.

7. Rahmengestell (1) nach einem der vorangegangen Ansprüche, bei dem der Zusatzrahmen (8) vier weitere Profilstreben (15) aufweist, die jeweils an ihren Enden über ein Eckstück (16) mit einer anderen der weiteren Profilstreben (15) unter einem 90°-Winkel verbunden sind, wobei mindestens eines der Eckstücke (16) ein Verbindungsstück (17) aufweist, das über einen Ausschnitt (18) in der Aufnahme (7) in einem Eckbereich (19) des Gestellrahmens (4) in den Gestellrahmen (4) hineinragt und dort form- und/oder kraftschlüssig aufgenommen ist.

8. Rahmengestell (1) nach Anspruch 1, bei dem der Zusatzrahmen (8) vier weitere, an ihren Enden um 45° zu ihrer Erstreckungsrichtung angeschrägte Profilstreben (15) aufweist, die jeweils an ihren Enden über ein Eckstück (16) mit einer anderen der weiteren Profilstreben (15) unter Ausbildung eines 90°-Winkel verbunden sind, und wobei die angeschrägten Profilenden der weiteren Profilstreben (15) jeweils einen Ausschnitt (22) aufweisen, so dass bei über die Eckstücke (16) miteinander verbundenen Profilstreben (15) die Ausschnitte (22) aneinander grenzender Profilstreben (15) jeweils einen der Durchlässe (20) bilden.

9. Rahmengestell (1) nach Anspruch 8, bei dem die Eckstücke (16) eine Lasche (23) mit mindestens einem weiteren Durchlass (24) aufweisen, wobei sich die Lasche (23) über die angeschrägten Enden der weiteren Profilstreben (15) in die weiteren Profilstreben (15) hinein erstrecken, und wobei einer der Durchlässe (20) in dem Zusatzrahmen (8) mit dem weiteren Durchlass (24) in der Lasche (23) fluchtet.

10. Rahmengestell (1) nach einem der vorangegangen Ansprüche, bei dem der Zusatzrahmen (8) formschlüssig in der Aufnahme (7) aufgenommen ist, wobei die Aufnahme (7) in einer Einsteckrichtung (X) für den Zusatzrahmen (8) in die Aufnahme (7) einen konstanten Querschnitt aufweist.

11. Rahmengestell (1) nach einem der vorangegangen Ansprüche, bei dem die Aufnahme (7) in einer Einsteckrichtung (X) für den Zusatzrahmen (8) in die Aufnahme (7) eine Abmessung aufweist, die einer Abmessung des Zusatzrahmens (8) in der Einsteckrichtung (X) entspricht, so dass bei in die Aufnahme (7) eingesetztem Zusatzrahmen (8) eine äußere Profilsseite (25) des Zusatzrahmens (8) mit einer äußeren Profilseite (9) oder einer Außenkante (10) des Gestellrahmens (4) fluchtet.

12. Rahmengestell (1) nach Anspruch 2, bei dem sich die Auflageseite (5) senkrecht zu einer Einsteckrichtung (X) für den Zusatzrahmen (8) in die Aufnahme (7) und die Verbindungsseite (6) parallel zu der Einsteckrichtung (X) erstreckt.

13. Rahmengestell (1) nach Anspruch 12, bei dem die Auflageseite (5) an gegenüber liegenden Kanten (26) in eine Innenumfangsseite (27) des Gestellrahmens (4) und in die Verbindungsseite (6) übergeht, wobei sich die Innenumfangsseite (27) parallel zu der Verbindungsseite (6) erstreckt, und wobei die Verbindungsseite (6) und die Innenumfangsseite (27) um eine Abmessung der Auflageseite (5) senkrecht zu den Kanten (26) zueinander versetzt angeordnet sind.

14. Rahmengestell (1) nach einem der vorangegangen Ansprüche, bei dem der Gestellrahmen (4) einen geschlossenen Profilquerschnitt und der Zusatzrahmen (8) einen offenen Profilquerschnitt aufweist, wobei eine offene Profilseite (30) des Zusatzrahmens (8) von mindestens einer geschlossenen Profilseite (5, 6) der Aufnahme (7) des Gestellrahmens (4) verschlossen ist, wenn der Zusatzrahmen (8) in der Aufnahme (7) aufgenommen ist.

15. Rahmengestell (1) nach Anspruch 6, bei dem der Zusatzrahmen (8) einen Steckabschnitt (S), über den der Zusatzrahmen (8) in die Aufnahme (7) eingesetzt ist, und einen Befestigungsabschnitt (B) mit Montageöffnungen (28), mit dem der Zusatzrahmen (8) eine Innenumfangsseite (27) des Gestellrahmens (4) überragt, aufweist, wobei der Zusatzrahmen (8) mit dem Befestigungsabschnitt (B) an der Innenumfangsseite (27) des Gestellrahmens (4) anliegt, wenn der Zusatzrahmen (8) über den Steckabschnitt (S) in die Aufnahme (7) eingesetzt ist.

## Claims

1. A rack (1) for a switchgear cabinet arrangement, comprising a main frame (2) that includes four vertical profiled struts (3) and eight horizontal profiled struts (3), four of said profiled struts (3) forming a rectangular rack frame (4) having a constant cross section, and wherein the rack frame (4) has a peripheral receptacle (7) which is formed by at least two profile sides (5, 6) of the profiled struts (3),which is open toward an external side (A) of the rack frame (4) and in which a rectangular additional frame (8) is inserted, wherein the additional frame (8) is a base frame, on which the main frame (2) is placed, **characterized in that** the additional frame (8) has vertical apertures (20) by means of which it is secured on a switchgear cabinet base (21).

2. The rack (1) of claim 1, in which the receptacle (7) includes a support side (5) for the additional frame (8) and a connection side (6), by means of which the support side (5) is connected with an exterior profile side (9) or an exterior edge (10) of the rack frame (4).

3. The rack (1) of claim 2, in which the support side (5) and the connection side (6) each form a support surface on which the additional frame (8) adjoins at least in sections in a form-fitting fashion, wherein the support surfaces extend to one another at an angle, particularly at an angle of 90°.

4. The rack (1) of claim 3, in which the additional frame (8) adjoins at least one of the support surfaces by means of a sealing agent (11).

5. The rack (1) of one of the foregoing claims, in which, in the receptacle (7) between the rack frame (4) and the additional frame (8), a channel (12) is configured, which is opened at the corners (13) of the rack frame (4) and/or of the additional frame (8).

6. The rack (1) of one of the foregoing claims, in which the additional frame (8) projects beyond the inner circumference of the rack frame (4) and includes an assembly and/or support side (14) aligned parallel to the external side (A) of the rack frame (4).

7. The rack (1) of one of the foregoing claims, in which the additional frame (8) includes four additional profiled struts (15), which each at their ends are connected by means of a corner piece (16) with another of the additional profiled struts (15) at a 90° angle, wherein at least one of the corner pieces (16) includes a connection piece (17) which, via a cutout (18) in the receptacle (7) in a corner area (19) of the rack frame (4), penetrates into the rack frame (4) and there is captured in form-fitting or force-fitting fashion.

8. The rack (1) of claim 1, in which the additional frame (8) includes four additional profiled struts (15), angled at their ends at 45° to their direction of extension, which are each connected at their end by means of a corner piece (16) with another of the additional profiled struts (15), forming a 90° angle, and wherein the angled profile ends of the additional profiled struts (15) each have a cutout (22), so that when the profiled struts (15) are connected with each other by means of the corner pieces (16), the cutouts (22) of the profiled struts (15) form one of the apertures (20).

9. The rack (1) of claim 8, in which the corner pieces (16) include a tab (23) with at least one additional aperture (24), wherein by means of the angled ends of the additional profiled struts (15), the tab (23) extends into the additional profiled struts (15), and wherein one of the apertures (20) in the additional frame (8) aligns with the additional aperture (24) in the tab (23).

10. The rack (1) of one of the foregoing claims, in which the additional frame (8) is captured in form-fitting fashion in the receptacle (7), wherein the receptacle (7), in a direction of insertion (X) for the additional frame (8) into the receptacle (7), exhibits a constant cross section.

11. The rack (1) of one of the foregoing claims, in which the receptacle (7), in a direction of insertion (X) for the additional frame (8) into the receptacle (7), exhibits a measurement which matches a measurement of the additional frame (8) in the direction of insertion (X), so that with the additional frame (8) inserted into the receptacle (7), an exterior profile side (25) of the additional frame (8) aligns with an exterior profile side (9) or an exterior edge (10) of the rack frame (4).

12. The rack (1) of claim 2, in which the support side (5) extends perpendicular to a direction of insertion (X) for the additional frame (8) into the receptacle (7) and the connection side (6) extends parallel to the direction of insertion (X).

13. The rack (1) of claim 12, in which the support side (5) transitions at opposing edges (26) to an inner peripheral side (27) of the rack frame (4) and into the connection side (6), wherein the inner peripheral side (27) extends parallel to the connection side (6), and wherein the connection side (6) and the inner peripheral side (27) are arranged offset to each other by the dimension of the support side (5) perpendicular to the edges (26).

14. The rack (1) of one of the foregoing claims, in which the rack frame (4) exhibits a closed profile cross section and the additional frame (8) exhibits an open profile cross section, wherein an open profile side (30) of the additional frame (8) is closed off by at least one closed profile side (5, 6) of the receptacle (7) of the rack frame (4), when the additional frame (8) is captured in the receptacle (7).

15. The rack (1) of claim 6, in which the additional frame (8) includes an insertion section (S), by means of which the additional frame (8) is inserted into the receptacle (7), and an attachment section (B) with attachment openings (28), by which the additional frame (8) projects beyond an inner peripheral side (27) of the rack frame (4), wherein the additional frame (8) adjoins with the attachment section (B) on the inner peripheral side (27) of the rack frame (4), when the additional frame (8) is inserted by means of the insertion section (S) into the receptacle (7).

## Revendications

1. Châssis (1) pour une disposition d'armoire de commande, avec un châssis de base (2), qui comprend quatre montants profilés verticaux (3) et huit montants profilés horizontaux (3), dont quatre montants profilés (3) forment un cadre rectangulaire (4) avec une section transversale constante, et le cadre (4) comprenant un logement périphérique (7), constitué d'au moins deux côtés profilés (5, 6) des montants profilés (3), qui est ouvert en direction d'un côté extérieur (A) du cadre (4) et dans lequel un cadre supplémentaire rectangulaire (8) est inséré, le cadre supplémentaire (8) étant un cadre de fond sur lequel le châssis de base (2) est posé, **caractérisé en ce que** le cadre supplémentaire (8) comprend des passages verticaux (20) par l'intermédiaire desquels il est fixé sur un socle d'armoire de commande (21).

2. Châssis (1) selon la revendication 1, dans lequel le logement (7) comprend un côté d'appui (5) pour le cadre supplémentaire (8) et un côté de liaison (6) par l'intermédiaire duquel le côté d'appui (5) est relié avec u côté profilé externe (9) ou une arête externe (10) du cadre (4).

3. Châssis (1) selon la revendication 2, dans lequel le côté d'appui (5) et le côté de liaison (6) forment chacun une surface d'appui sur chacune desquelles le cadre supplémentaire (8) s'appuie, au moins à certains endroits, par complémentarité de forme, les surfaces d'appui s'étendant avec un angle, plus particulièrement avec un angle de 90°, entre elles.

4. Châssis (1) selon la revendication 3, dans lequel le cadre supplémentaire (8) s'appuie sur au moins une des surfaces d'appui par l'intermédiaire d'un moyen d'étanchéité (11).

5. Châssis (1) selon l'une des revendications précédentes, dans lequel, dans le logement (7), entre le cadre (4) et le cadre supplémentaire (8), est réalisé un canal (12) qui est ouvert au niveau des angles (13) du cadre (4) et/ou du cadre supplémentaire (8).

6. Châssis (1) selon l'une des revendications précédentes, dans lequel le cadre supplémentaire (8) dépasse de la circonférence interne du cadre (4) et comprend un côté de montage et/ou d'appui (14) orienté parallèle au côté externe (A) du cadre (4).

7. Châssis (1) selon l'une des revendications précédentes, dans lequel le cadre supplémentaire (8) comprend quatre montants profilés supplémentaires (15) qui sont reliés chacun à leur extrémité par l'intermédiaire d'une pièce d'angle (16), avec un autre des montants profilés supplémentaires (15), en formant un angle de 90°, au moins une des pièces d'angle (16) comprenant une pièce de liaison (17), qui pénètre dans le cadre (4), par l'intermédiaire d'une découpe (18) dans le logement (7), dans une zone d'angle (19) du cadre (4), et qui y est logée par complémentarité de forme ou par force.

8. Châssis (1) selon la revendication 1, dans lequel le cadre supplémentaire (8) comprend quatre autres montants profilés (15) chanfreinés, au niveau de leurs extrémités, à 45° par rapport à leur direction d'extension, qui sont reliés chacun au niveau de leur extrémité, par l'intermédiaire d'une pièce d'angle (16), avec un autre des montants profilés supplémentaires (15) en formant un angle de 90°, et les extrémités de profilés chanfreinées des montants profilés supplémentaires (15) comprenant chacune une découpe (22), de façon à ce que, lorsque les montants profilés (15) sont reliés entre eux par l'intermédiaire des pièces d'angle (16), les découpes (22) de montants profilés (15) adjacents forment un des passages (20).

9. Châssis (1) selon la revendication 8, dans lequel les pièces d'angle (16) comprennent une patte (23) avec au moins un passage supplémentaire (24), la patte (23) s'étendant au-dessus des extrémités chanfreinées des montants profilés supplémentaires (15) à l'intérieur des montants profilés supplémentaires (15) et un des passages (20) dans le cadre supplémentaire (8) étant aligné avec un autre passage (24) dans la patte (23).

10. Châssis (1) selon l'une des revendications précédentes, dans lequel le cadre supplémentaire (8) est logé par complémentarité de forme dans le logement (7), le logement (7) présentant une section transversale constante dans une direction d'extension (X), pour le cadre supplémentaire (8) dans le logement (7).

11. Châssis (1) selon l'une des revendications précédentes, dans lequel le logement (7) présente, dans une direction d'extension (X) pour le cadre supplémentaire (8) dans le logement (7), une dimension qui correspond à une dimension du cadre supplémentaire (8) dans la direction d'extension (X), de façon à ce que, lorsque le cadre supplémentaire (8) est inséré dans le logement (7), un côté de profilé externe (25) du cadre supplémentaire (8) soit aligné avec un côté de profilé externe (9) ou une arête externe (10) du cadre (4).

12. Châssis (1) selon la revendication 2, dans lequel le côté d'appui (5) s'étend perpendiculairement à une direction d'extension (X) pour le cadre supplémentaire (8) dans le logement (7) et le côté de liaison (6) s'étend parallèlement à la direction d'extension (X).

13. Châssis (1) selon la revendication 12, dans lequel le côté d'appui (5) se transforme, au niveau d'arêtes opposées (26), en un côté de circonférence interne (27) du cadre (4) et en côté de liaison (6), le côté de circonférence interne (27) s'étendant parallèlement au côté de liaison (6) et le côté de liaison (6) et le côté de circonférence interne (27) étant disposés de manière décalée entre eux d'une dimension du côté d'appui (5) perpendiculairement aux arêtes (26).

14. Châssis (1) selon l'une des revendications précédentes, dans lequel le cadre (4) présente une section transversale de profilé fermée et le cadre supplémentaire (8) présente une section transversale de profilé ouverte, un côté de profilé ouvert (30) du cadre supplémentaire (8) étant fermé par au moins un côté de profilé fermé (5, 6) du logement (7) du cadre (4), lorsque le cadre supplémentaire (8) est logé dans le logement (7).

15. Châssis (1) selon la revendication 6, dans lequel le cadre supplémentaire (8) comprend une portion d'enfichage (S), par l'intermédiaire de laquelle le cadre supplémentaire (8) est inséré dans le logement (7), et une portion de fixation (B) avec des ouvertures de montage (28), avec laquelle le cadre supplémentaire (8) dépasse d'un côté de circonférence interne (27) du cadre (4), le cadre supplémentaire (8) s'appuyant, avec la portion de fixation (B), contre le côté de circonférence interne (27) du cadre (4) lorsque le cadre supplémentaire (8) est inséré par l'intermédiaire de la portion d'enfichage (S), dans le logement (7).
